Europäisches Patentamt

European Patent Office

Office européen des brevets

(19)

(11) Publication number: **0 126 720**
**A2**

(12) **EUROPEAN PATENT APPLICATION**

(21) Application number: **84850151.6**

(22) Date of filing: **16.05.84**

(51) Int. Cl.³: **G 01 S 7/02**

(30) Priority: **18.05.83 SE 8302786**

(43) Date of publication of application: **28.11.84**
**Bulletin 84/48**

(84) Designated Contracting States: **AT BE CH DE FR GB IT LI LU NL SE**

(71) Applicant: **SATT ELECTRONICS AB,**
**Tellusborgsvägen 90-94, S-126 37 Hägersten (SE)**

(72) Inventor: **Celander, Bo, Bykrogsvägen 17,**
**S-141 43 Huddinge (SE)**
Inventor: **Lydh, Tommy, Skulptörvägen 17,**
**S-121 43 Johanneshov (SE)**

(74) Representative: **Berglund, Gustav Arthur et al,**
**AWAPATENT AB Box 5117, S-200 71 Malmö (SE)**

(54) **Radar warning correlator.**

(57) A radar warning correlator is connected in the signal processing chain of an aircraft radar warning system ahead of a final processing computer. An address forming unit (4, 5) forms addresses of records in a first file of a memory unit (3) on the basis of the contents in pulse descriptors comprising parameters characteristic of a pulse in a radar pulse burst sweeping over the aircraft. The address forming unit also forms addresses to records in a second file of said memory unit on the basis of the contents of each separate record of said first file. A correlating unit (9) compares the contents of each pulse descriptor with the contents of a corresponding record in said first file and compares the contents of each record in said first file with the contents in a corresponding record of said second file. A logic unit (9) updates each of said last-mentioned contents with each of said first-mentioned contents upon the occurrence of correlation therebetween. A transfer unit (2) transfers the contents of the records in said second file to the final processing computer.

## RADAR WARNING CORRELATOR

The present invention relates generally to radar warning systems for aircraft and, more particularly, to a radar warning correlator connected in the signal processing chain of an aircraft radar warning system ahead of the final processing computer of the system.

To be able quickly and exactly to determine the position and type of a radar transmitter sweeping over an aircraft with its radar pulses, the radar warning system of the aircraft preferably should be capable of processing measured radar pulses in real time. In view of the pulse frequencies that may occur, some type of compressing pulse processing ahead of the final processing of the computer is then required.

It is the object of the present invention to facilitate such real time processing of radar pulses by providing a radar warning correlator reducing the amount of data to be processed by a subsequent computer.

According to the invention, this object is achieved by means of the said correlator which is characterised by an address forming unit to form addresses of records in a first file of a memory unit on the basis of the contents of pulse descriptors each comprising measured values of a plurality of parameters characteristic of a pulse in a radar pulse burst sweeping over the aircraft, and to form addresses of records in a second file of said memory unit on the basis of the contents of each individual record in said first file, a correlating unit for comparing the contents of each pulse descriptor with the contents of the corresponding record in said first file and comparing the contents of each record in said first file with the contents of the corresponding record in said second file, a logic unit for updating each of said last-mentioned contents with each of said first-mentioned contents upon the occur-

**0126720**

currence of correlation therebetween, and a transfer unit for transferring the contents of the records of said second file to the computer for final processing, said units being adapted to carry out, as a first step, the processing of said pulse descriptors and the records of said first file and, as a second step, the processing of the records of said first file and the records of said second file.

Preferred embodiments of the correlator according to the present invention are characterised by the features stated in the subsequent nonindependent claims.

The input date to the correlator thus are digital pulse descriptors which are the result of a preprocessing of the electromagnetic radar pulses received by the radar antenna of the aircraft. These pulse descriptors are processed in the correlator in two steps, i.e. a pulse sorting step and a burst sorting step.

In the pulse sorting step, it is endeavoured to build up, by means of the incoming pulse descriptors, signal type descriptions of the radar transmitters which at the moment are sweeping over the aircraft. These transmitter descriptions which are termed bursts, are organised in a burst file in which it is endeavoured to find the correct record (burst) to be updated with the pulse values by means of a hashing procedure in which the pulse parameter values constitute the address of the probable record for updating.

In the subsequent burst sorting, it is endeavoured, when a burst has ceased, to build up, by means of said burst records, signal type descriptions of active transmitters which at the moment are not sweeping over the aircraft. These transmitter descriptions which are termed transmitters, are organised in a corresponding transmitter file. Searching and updating are effected essentially in the same manner as during pulse sorting.

By the thus successive build-up of the transmitter descriptions, rapid processing is obtainable, the transmitter records of the transmitter file being dealt with, directly record by record, by the final processing computer for further identification.

A preferred embodiment of a radar warning correlator according to the present invention will now be described in more detail below, reference being had to the accompanying drawings in which Fig. 1 is a block diagram of a microprogrammed correlator according to the present invention. Fig. 2 is a functional diagram illustrating the hashing and correlating mechanism in the correlator according to the present invention. Fig. 3 is a process and data structure diagram for the correlator according to the present invention.

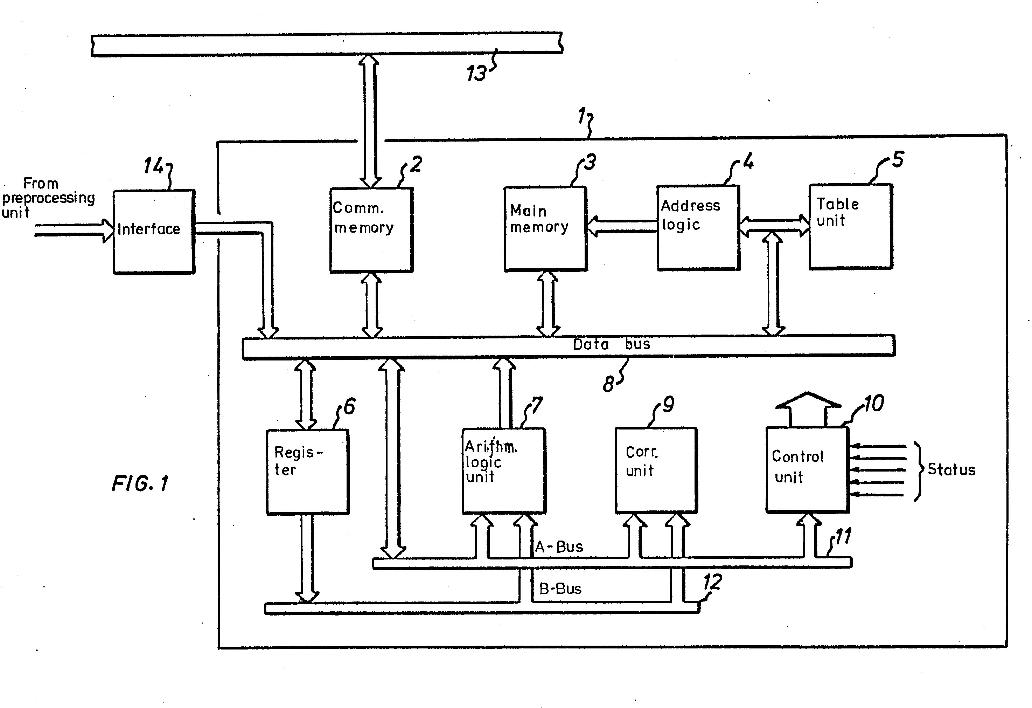

A radar warning correlator 1 illustrated in Fig. 1 comprises a communication memory unit 2, a main memory unit 3, an address forming unit consisting of an address logic unit 4 and an address table unit 5, a register unit 6 and an arithmetic logic unit 7, all of which units are connected to a common data bus 8. The correlator further comprises a correlating unit 9 and a control unit 10, said control unit 10, said correlating unit 9 and said arithmetic logic unit 7 being connected to one another and to the data bus 8 by means of a first separate bus 11, while said correlating unit 9, said arithmetic logic unit 7 and said register unit 6 are connected to one another by means of a second separate data bus 12. The correlator 1 is connected, via the communication memory unit 2, to a data bus 13 forming part of the final processing computer of the aircraft radar warning system.

The correlator 1 receives its input data, via an interface 14, from a preprocessing unit connected to a radar antenna. More particularly, the preprocessing unit generates, from the measured radar pulses, digital pulse descriptors comprising measured values of a plurality of parameters characteristic of a pulse in a radar pulse burst, such as the pulse width, the pulse amplitude and the direction to the radar transmitter.

The communication memory unit 2 is a write and read memory (RAM) which constitutes the communication area between the external computer and the correlator 1. The function of the memory unit 2 comprises receiving from the computer a message which the correlator 1 can read and interpret. In reply to this message, the correlator can supply data or status information, or open a communication channel to units positioned farther out in the signal processing chain.

The main memory unit 3 is a mass memory of the write-read type logically divided into three data areas or files which are termed burst file, transmitter file and logger file. The burst file comprises a number of records containing signal type descriptions of pulses from radar transmitters which, at the moment, are sweeping over the aircraft. The transmitter file, in its turn, comprises a number of records containing signal type descriptions of active transmitters which, at the moment, are not sweeping over the aircraft. The records of the transmitter file are updated by records from the burst file for which sweeping has ceased. The logger file, finally, comprises a number of logger records, each of which is a copy of the burst record which was the last to update a specific transmitter record. Each active transmitter record has, in itself, a pointer to that location in the logger file where the burst record which was the last to update the transmitter post, can be found. Those burst record copies of the logger file which pertain to one and the same transmitter post, are organised in the form of a linked list.

The address logic unit 4 is specially designed to follow the logic structure of the main memory unit 3. Thus, it is possible with the address logic unit 4 to directly address different fields within a record or the same element within different records.

Addressing of the address table units 5 also is effected by means of the address logic unit 4. More particularly, the table unit 5 contains pointer tables for determining addresses of, respectively, the burst file and the transmitter file of the main memory unit 3. The table unit 5 also has an equalisation function on the contents of a pulse descriptor, before this is utilised, by a hashing function, for looking up in a pointer table the address of a record in the burst record file of the memory unit 3. The equalisation function can be modified from outside via the communication memory unit 2 by means of the external computer.

The register unit 6 is a notation memory for data and system variables, whereas the arithmetic logic unit 7 contains a conventional arithmetic logic unit and a mean value forming unit (digital lowpass filter), a logarithmising unit (table finding in read memory) and maximum and minimum comparators.

The correlating units 9 is adapted to carry out its correlating function by comparing input data with window or interval limits tabulated in a read-write memory. The size of the correlating windows can be modified from outside by the external computer via the communication unit 2.

The control unit 10 contains the microprogram memory, the program control logic, condition decoders for conditional jumps, and a separate read memory, and entirely controls the activity of the correlator on the basis of the microprogram.

The mode of operation of the correlator according to the present invention will be described below and is divided into a pulse handling process, a burst handling process and an aging process.

As regards the pulse handling process, i.e. the updating of the burst file records with received pulse descriptors, pulse descriptors are read from a queue into the register unit 6, simultaneously as the parameter values of the pulse descriptors are equalised in the table unit 5, whereupon the equalised pulse descriptor is utilised in the same unit as look-up data in an address table for the burst file in the memory unit 3. These sequences occur in parallel for each component in the read-inpulse descriptor which comprises eight character sets or bytes of data.

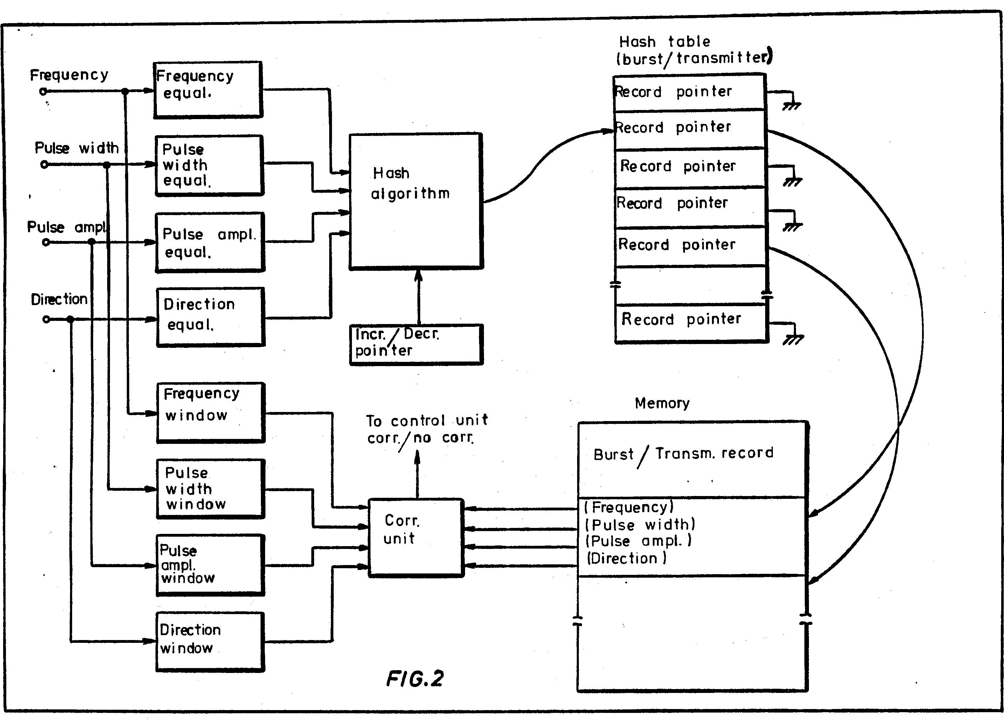

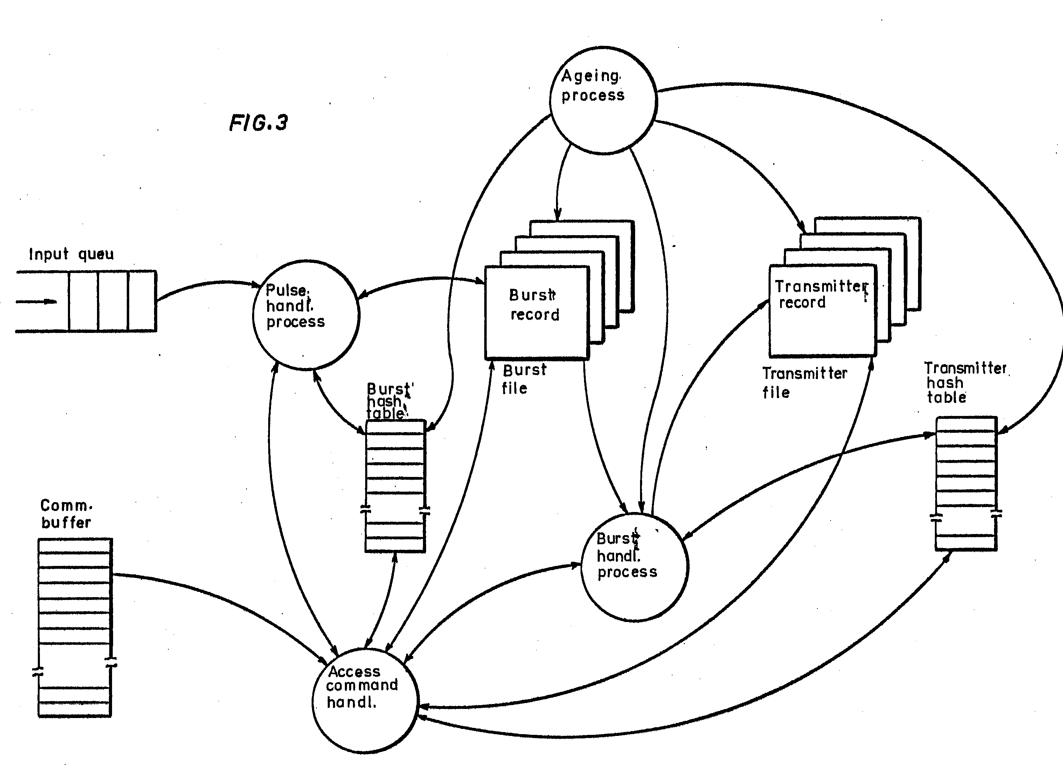

The pointer found in the address table unit 5 is used by the address logic unit 4 as an address of a record in the burst file of the main memory unit 3. In the next step, the data of the pulse descriptor, as stored in the register unit 6, are compared with the contents of the pointed-out record in the burst file with the aid of the correlating unit 9 which receives these data via the two separate data buses. The correlating unit 9 also comprises the correlating window blocks indicated in Fig. 2. If the descriptor and the addressed burst record are correlated, the latter will be updated with the values of the descriptor. If no correlation exists, a new record is looked up in the burst file by the address-forming unit 4, 5, and this is repeated until a predetermined maximum number of attempts have been made. After that, a new record is established in the burst file, and the record address concerned is written in the address table unit 5.

If, on the other hand, correlation exists, then the addressed record is updated in the memory unit 3 by the arithmetic logic unit 7 which for this purpose receives on the one hand the contents of the record concerned and, on the other hand, the contents of the processed descriptor stored in the register unit 6. As will appear from Fig. 2, burst handling, i.e. the updating of the records in the transmitter file with the records in the burst file, is carried out entirely in analogy with the pulse handling and follows similar algorithms, by utilising the same hardware. Instead of correlating pulses relative to burst descriptions, it is here attempted to refer burst records to existing transmitter descriptions.

The aging process indicated in Fig. 3 has for its object to maintain real time synchronism in the correlator. To activate the process, a real time clock (hardware) causes an interruption at intervals of the predetermined number of clock cycles, and it is checked whether a sweep is ready, i.e. that no burst record has been updated within a given period of time, and furthermore aging of transmitter records is effected so that nonactive transmitter posts are removed and room is made for new ones. If a burst record has not been updated within a given period of time, the aging initiates the burst handling process which attempts to refer the burst to a transmitter description. In this manner, the record in the burst file can be vacated, and the pointer in the address'table unit 5 may be removed.

When the external computer calls for attention from the correlator 1 by introducing a message into the communication memory unit 2, the correlator 1 abandons its normal work of sorting pulses and bursts and changes its mode of operation. Reading and interpreting the message from the external computer occurs in the control unit 10 which also sees to it that the correlator 1 supplies the information to the external computer which this computer may need for its identification work.

Finally, it should be mentioned that the external computer, via the communication memory unit 2, can gain access to the memory unit 3, the address table unit 5 and the register unit. For instance, system constants may be supplied from the outer computer via the communication memory unit 2 into the register unit 6, irrelevant descriptions may be deleted from the memory unit 3, new equalisation functions may be introduced into the address table unit 5 and new correlating window values may be introduced into the correlating unit 9.

In order quickly to look up a record against which a correlating attempt can be made, the present invention thus utilises a hashing procedure. First, relevant parameter values are transformed via an equalisation function which may be used in order to dampen large variations in a parameter, such as amplitude variations during a sweep, whereupon a table input value is devised via a hashing algorithm. This input value is then used to look up in an address table a pointer to a probable burst or transmitter record. If the input is "vacant", i.e. if the looked-up pointer does not point to any record, record pointers in the adjacent inputs in the address table are investigated.

CLAIMS

1. A radar warning correlator connected in the signal processing chain of an aircraft radar warning system ahead of a final processing computer, c h a - r a c t e r i s e d  by an address forming unit (4, 5) to form addresses of records in a first file of a memory unit on the basis of the contents of pulse descriptors each comprising measured values of a plurality of parameters characteristic of a pulse in a radar pulse burst sweeping over the aircraft, and to form addresses of records in a second file of said memory unit on the basis of the contents of each individual record in said first file, a correlating unit (9) for comparing the contents of each pulse descriptor with the contents of the corresponding record in·said first file and comparing the contents of each record in said first file with the contents of the corresponding record in said second file, a logic unit (7) for updating each of said last-mentioned contents with each of said first-mentioned contents upon the occurrence of correlation therebetween, and a transfer unit (2) for transferring the contents of the records of said second file to the computer for final processing, said units being adapted to carry out, as a first step, the processing of said pulse descriptors and the records of said first file and, as a second step, the processing of the records of said first file and the records of said second file.

2. A radar warning correlator as claimed in claim 1, c h a r a c t e r i s e d  by a register unit (6) for temporary storage of the pulse descriptors sequentially received from a pulse preprocesser connected to a radar antenna.

3. A radar warning correlator as claimed in claim 2, c h a r a c t e r i s e d  by two separate data buses (11, 12), both of which are connected each to one of the inputs of said correlating and logic unit (7, 9), while one of said data buses is connectible to the output of said register unit (6) and the other is connectible to said memory unit (3).

4. A radar warning correlator as claimed in claim 2 or 3, c h a r a c t e r i s e d  in that its units are connected to one another via a common data bus (8).

5. A radar warning correlator as claimed in claim 4, c h a r a c t e r i s e d  in that said common data bus (8) is connected to an interface (14) connected to said pulse preprocessor.

6. A radar warning correlator as claimed in any one of claims 1-5, c h a r a c t e r i s e d  in that said address forming unit comprises an address logic unit (4) and an address table unit (5) for looking up the addresses having the value of a function of the contents of, respectively, each descriptor and each record in said first file as an input value.

7. A radar warning correlator as claimed in claim 6, c h a r a c t e r i s e d  in that the input values of said address table unit (5) are based upon a hashing function, preferably proceeding from an equalised descriptor value and record value, respectively.

8. A radar warning correlator as claimed in any one of claims 1-7, c h a r a c t e r i s e d  in that said transfer unit comprises a communication memory unit (2) connecting the radar warning correlator to the final processing computer.

9. A radar warning correlator as claimed in any one of claims 1-8, c h a r a c t e r i s e d  in that said memory unit (3) comprises a third file for storing the record in the first file which was the last to update the corresponding record of the second file.

10. A radar warning correlator as claimed in any one of claims 1-9, c h a r a c t e r i s e d  by a microprogram-controlled control unit (10) for controlling the operation of the correlator.

FIG.1

From preprocessing unit

Interface 14

Comm. memory 2

Main memory 3

Address logic 4

Table unit 5

Data bus 8

Register 6

Arithm. logic unit 7

Corr. unit 9

Control unit 10

Status

A-Bus 11

B-Bus 12

13

1

1/3

0126720

FIG.2

FIG.3